# EUROPEAN PATENT APPLICATION

(11) **EP 4 164 092 A1**
(43) Date of publication of application: **12.04.2023**
(21) Application number: 21200942.7
(22) Date of filing: 05.10.2021
(51) Int. Cl.: H02K 1/14, H02K 15/02, H02K 21/22, H02K 29/03

(54) **SINGLE-PHASE BRUSHLESS DIRECT CURRENT MOTOR**

(71) Applicant: Technische Universität Graz, 8010 Graz (AT)
(72) Inventor: LEITNER, Stefan, 8010 Graz (AT)
(74) Representative: Weiser & Voith Patentanwälte Partnerschaft

(57) **Abstract**

The present invention relates to a single-phase brushless direct current, BLDC, motor comprising a stator (2) with a metal core (4) on which a coil (5) is wound and a rotor (3) which is rotatable about a central axis (6) and has circumferentially alternating magnetic poles (7_{N}, 7_{S}) surrounding the stator (2), wherein the metal core (4) is constituted by one strip (9) or a combination (10) of two strips (11, 12) of sheet metal having a sheet plane which is parallel to the central axis (6), wherein said one strip (9) or said combination (10) has two opposite end parts (13) bent in circumferential direction (8) of the rotor (3) to form two opposite stator poles each facing the rotor (3) with a radial air gap (G), and a middle part (14) on which the coil (5) is wound and which connects the two end parts (13) .

## Description

The present invention relates to a single-phase brushless direct current motor comprising a stator with a metal core on which a coil is wound and a rotor which is rotatable about a central axis and has a plurality of circumferentially alternating magnetic poles surrounding the stator.

Brushless direct current ("BLDC") motors are permanent-magnet motors which use a direct current ("DC") electrical power supply. In contrast to brushed DC motors, BLDC motors do not have a mechanical commutator but are electronically commutated: Controlled switches, typically semiconductor switches, commutate the DC current supplying the stator coil(s) to generate an alternating or rotating magnetic field. The permanent magnet rotor aims to align with the magnetic field of the stator. To this end, the rotor is either surrounded by the stator, known as "inrunner", "inner runner", "inner rotor", or "internal rotor" motor, or (in the present case) surrounds the stator, known as "outrunner", "outer runner", "outer rotor", or "external rotor" motor.

Single-phase BLDC motors exhibit larger torque ripples and cogging torque than, e.g., three-phase BLDC motors. On the other hand, the structure and control of single-phase BLDC motors is much simpler; hence, they are employed in devices where torque ripples and cogging torque are less relevant, e.g., in low power cooling fans, medical devices etc. Given the significant demand for such motors for, e.g., cooling electronic components and modules, reducing the complexity of the motors and each component thereof and the cost of manufacturing is essential. For instance, a stack of laminations required to suppress eddy current losses in the stator increases the component count and cost of conventional motors. Hence, BLDC claw-pole motors which do not require lamination stacks have been proposed; due to the design of claw-pole motors, however, special tools are required during their manufacture.

It is an object of the present invention to provide a reliable single-phase BLDC motor the manufacturing of which is particularly simple, flexible and cost-effective.

This object is achieved with a BLDC motor specified at the outset the metal core of which is constituted by one strip or a combination of two strips of sheet metal having a sheet plane which is parallel to the central axis, wherein said one strip or said combination has two opposite end parts which are bent in circumferential direction of the rotor to form two opposite stator poles each facing the rotor with a radial air gap, and a middle part on which the coil is wound and which connects the two end parts.

As opposed to a claw-pole motor the stator of which has to be deep-drawn, the stator of the present BLDC motor merely requires bending over a straight edge, which is particularly simple and can flexibly be applied to stators of different size even with one and the same tool; moreover, two or more strips can be bent simultaneously over the same edge when they are laid over the edge side by side. This saves costs both during the manufacturing process and for the tools deployed therein. It is noted that, due to its structure and design, the present BLDC motor is particularly suitable for the sector of sub-fractional horsepower motors.

In an advantageous first embodiment in which the metal core is constituted by one strip, said one strip has the shape of an S when seen in the direction of the central axis, wherein the middle section of the S forms said middle part and each end section of the S forms one of said end parts. Thereby, the structure of the metal core and, thus, of the motor is particularly simple requiring only a single sheet metal strip, e.g., a strip of sheet steel. In a favourable variant thereof, the middle section of the S is additionally bent around the central axis to accommodate an axle of the rotor, which allows for a higher integration of the BLDC motor.

In an advantageous second embodiment in which the metal core is constituted by the combination of two strips, each strip of said combination has the shape of a C when seen in the direction of the central axis, wherein the two Cs are arranged back-to-back with their middle sections abutting against each other to form said middle part, and wherein the one end sections of each of the two Cs form the one and their other end sections form the other one of said end parts. In this embodiment, the stator is less prone to magnetic saturation due to its structure. To achieve the same effect as in the abovementioned first embodiment, the middle sections of the two Cs are favourably bent around the central axis to accommodate an axle of the rotor also in the second embodiment.

In a beneficial variant, the two end sections of each C have different lengths and the two Cs are arranged back-to-back in such a way that the end sections forming each of said end parts have different lengths to affect the magnetic flux density as required.

In an advantageous third embodiment in which the metal core is also constituted by the combination of two strips, each strip of said combination has the shape of an L when seen in the direction of the central axis, wherein the two Ls are arranged back-to-back with their one legs abutting against each other to form said middle part, and wherein each of their other legs forms one of said end parts. The bending of the stator is easier to achieve in this embodiment than in the above embodiments; in addition, the stator is less prone to magnetic saturation than in the first embodiment. Favourably, said one legs of the two Ls are bent around the central axis to accommodate an axle of the rotor, thereby achieving the abovementioned effect.

In order to support the starting of the BLDC motor, it is advantageous when said end parts are bent such that the radial air gaps decrease in the same circumferential direction, i.e., both air gaps decrease either in the one or in the other circumferential direction, thus, clockwise or counter-clockwise when seen in the direction of the central axis. Alternatively or additionally, the starting capability can be facilitated by decreasing the axial extensions of said end parts in the same circumferential direction. This decrease of the axial extension can be achieved, e.g., by chamfering or notching said end parts. In a further alternative of additional variant, end parts have holes, the number and/or sizes of which increase(s) in the same circumferential direction to achieve or boost the starting capability of the BLDC motor.

In a favourable embodiment, the coil is formed by two radially spaced windings, each of which comprises one or more turns of wire. This allows for different ways of winding and connecting the windings and is particularly suitable in those variants in which the stator accommodates the axle of the rotor. The windings may be connected in series or in parallel and each winding may be monofilar or bifilar. An advantage of bifilar windings is that commutation can be achieved with only two switches.

For integration and smaller overall design of the BLDC motor and its controller, it is advantageous when said one strip or said combination has one or more pins extending in the same axial direction for mounting on a printed circuit board, e.g., a control board for the BLDC motor. The pins can also be used for grounding the stator core to reduce the radiated electromagnetic emissions.

While the rotor may have a multiplicity of poles, it is beneficial when the rotor has two magnetic poles to achieve a high rotational speed.

The invention shall now be explained in more detail below on the basis of exemplary embodiments thereof with reference to the accompanying drawings, in which:
Figs. 1a and 1b show two variants of a first embodiment of a single-phase brushless direct current motor according to the present invention in a cross-section in axial direction;
Figs. 2a and 2b show two variants of a second embodiment of the single-phase brushless direct current motor according to the present invention in a cross-section in axial direction;
Fig. 3 shows a third embodiment of the single-phase brushless direct current motor according to the present invention in a cross-section in axial direction;
Figs. 4a - 4d show four different variants of a sheet metal strip before bending for use as metal core of the motor of Figs. 1a, 1b, 2a, 2b or 3, having a rectangular (Fig. 4a), a first (Fig. 4b) and second (Fig. 4c) chamfered and a holed (Fig. 4d) shape, each in a plan view;
Fig. 5 shows a variant of the sheet metal strip of Fig. 4a in a plan view; and
Figs. 6a to 6c show different ways of winding a stator coil of the motor of Figs. 1a, 1b, 2a, 2b or 3 in respective winding diagrams.

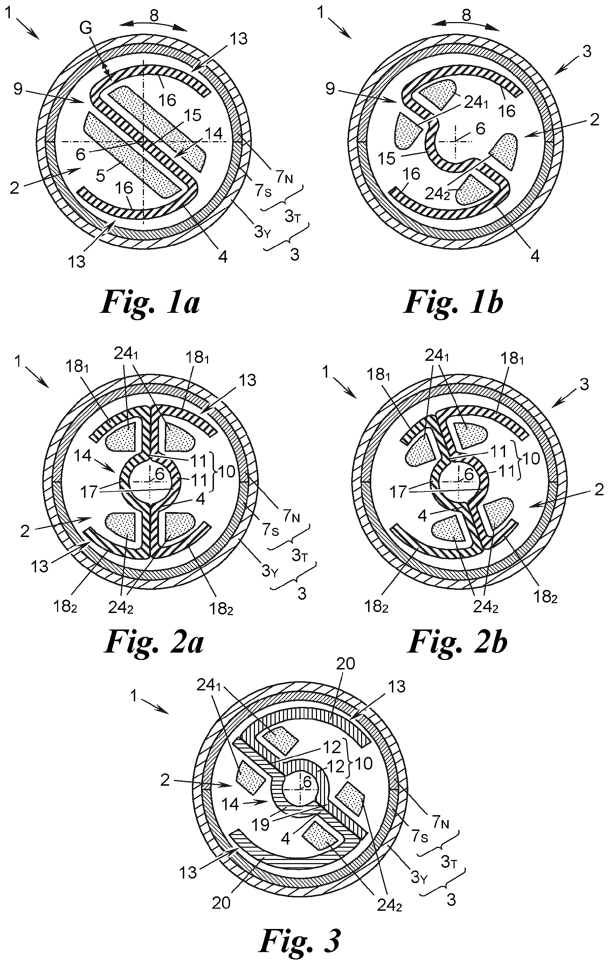

Figs. 1a, 2a and 3 show three different embodiments of a single-phase brushless direct current ("BLDC") motor 1. The BLDC motor 1 comprises a stator 2 and a rotor 3. The stator 2 has a metal core 4 on which a coil 5 is wound. The rotor 3 is rotatable about a central axis 6 of the BLDC motor 1 and has two or more, i.e., a plurality of magnetic poles 7_{N}, 7_{S} which surround the stator 2. To this end, the rotor 3 is ring- or bell-shaped and is optionally built from a non-magnetised (e.g., iron) yoke 3_{Y} with either a ring magnet or a rolled-up magnetic tape 3_{T} inside. Hence, the BLDC motor 1 is an "outrunner" motor.

The magnetic poles 7_{N}, 7_{S} alternate in circumferential direction 8 of the rotor 3 such that a magnetic north pole 7_{N} follows a magnetic south pole 7_{S} and vice versa. In the shown examples, the rotor 3 has two magnetic poles 7_{N}, 7_{S}; in other embodiments, the rotor 3 may have, e.g., four, six, eight, ten or more magnetic poles 7_{N}, 7_{S}.

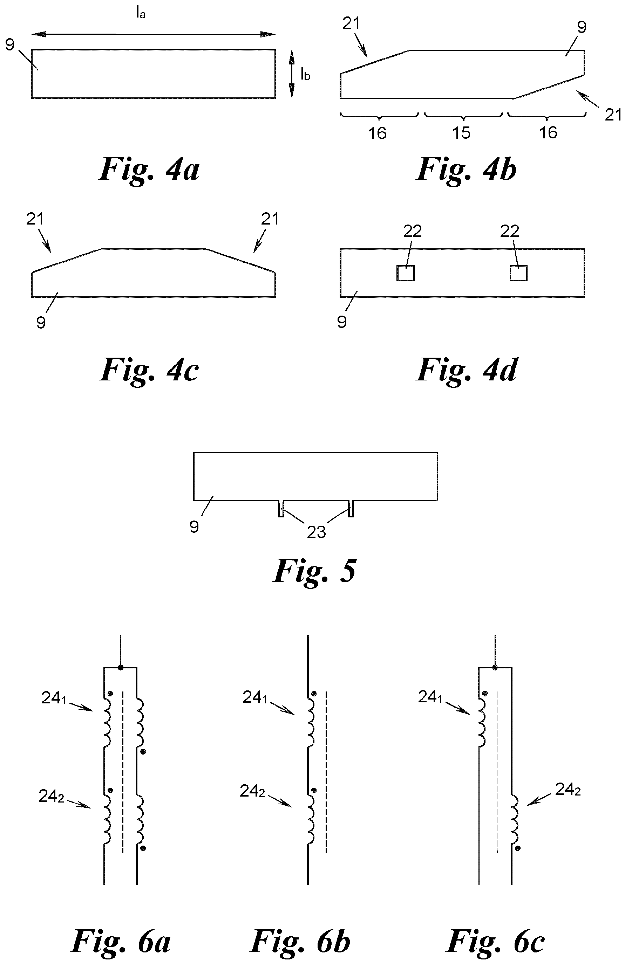

The metal core 4 of the stator 2 is either constituted by one strip 9 (Figs. 1a and 1b) or by a combination 10 of two strips 11, 12 (Figs. 2a and 2b or 3) of sheet metal, e.g., sheet steel, having a sheet plane that is parallel to the central axis 6. Design details of the strips 9, 11, 12 will be explicated below with reference to Figs. 4a - 4d. Said one strip 9 or said combination 10 has two opposite end parts 13 which are bent in circumferential direction 8 of the rotor 3 to form two opposite stator poles each facing the rotor 3 with an intermediate radial air gap G. A middle part 14 of the one strip 9 or of the combination 10 connects the two end parts 13; the coil 5 is wound on the middle part 14.

In the embodiments of Figs. 1a and 1b, the metal core 4 is constituted by the one strip 9 of sheet metal. The strip 9 has the shape of an S when seen in a direction of the central axis 6 as depicted. Thereby, the middle section 15 of the S forms the above mentioned middle part 14 and each end section 16 of the S forms one of the above mentioned end parts 13 of the metal core 4 (here: of the strip 9).

In the variant shown in Fig. 1b, the middle section 15 of the S is additionally bent around the central axis 6 such that an axle (not shown) or, likewise, a bearing of the rotor 3 can be accommodated. Otherwise, the rotor 3 would be supported on its side radially or axially facing away from the stator 2.

In the embodiments of Figs. 2a and 2b in which the metal core 4 is constituted by said combination 10 of two strips 11, each strip 11 of said combination 10 has the shape of a C when seen in a direction of a central axis 6. The two Cs are arranged back-to-back with their middle sections 17 abutting against each other and, thereby, form the middle part 14 of the combination 10. The one end sections 18₁ of each of the two Cs form the one of the end parts 13 of the metal core 4 (here: of the combination 10) and their other end sections 18₂ form the other one of said end parts 13.

Similar to the S-shaped strip 9 of Fig. 1b, the middle sections 17 of the two Cs are optionally bent around the central axis 6 to accommodate the axle of the rotor 3. In the example of Fig. 2a, the two Cs are mirror-symmetrical, thereby forming an eye around the axle (or bearing); alternatively, both middle sections 17 could be bent to bypass the axle on one and the same side (not shown).

In the variant of the BLDC motor 1 shown in Fig. 2b, the two end sections 18₁, 18₂ of each C have different lengths. The two Cs are arranged back-to-back in such a way that both the end sections 18₁ forming the one of said end parts 13 of the combination 10, and the end sections 18₂ forming the other one of said end parts 13 have different lengths.

In the embodiment of the BLDC motor 1 shown in Fig. 3, the metal core 4 is similarly constituted by said combination 10 of two strips (here: the strips 12) of sheet metal. In this embodiment, however, each strip 12 of the combination 10 has the shape of an L when seen in the direction of a central axis 6. Therein, the two Ls are arranged back-to-back with their one legs 19 abutting against each other, thereby forming the middle part 14 of the combination 10, and each of their other legs 20 form one of said end parts 13 of the metal core 4 (here: of the combination 10). Optionally, said one legs 19 of the two Ls are bent around the central axis 6 to accommodate the axle of the rotor 3, like described above with respect to the exemplary embodiment of Fig. 2a.

The capability of starting the BLDC motor 1 can optionally be supported by one or more of the following structural features:
In Fig. 1a, a first structural feature is illustrated. Therein, the end parts 13 (here: the end sections 16) are bent in a way that the radial air gaps G between the stator 2 and the rotor 3 decrease in the same circumferential direction 8, i.e., clockwise (as shown) or counter-clockwise. Similar decreasing air gaps G can be achieved with the combination 10 of C-shaped strips 11 or L-shaped strips 12 as depicted in Figs. 2a, 2b and 3.

Figs. 4a - 4d show various examples for the design of the sheet metal strip 9 in a plan view before bending into the S-shape; based thereon, further structural features that facilitate the starting of the BLDC motor 1 shall be illustrated. Generally, the strip 9 has a longitudinal extension 1ₐ that exceeds its transverse extension 1_{b}; the thickness of the sheet metal (here: in viewing direction and, thus, not visible) is smaller than the transverse extension 1_{b} and typically one millimetre or less to prevent excessive eddy current losses.

The rectangular design of the strip 9 in Fig. 4a may, e.g., be used with the decreasing radial air gaps G described above to support the starting capability of the BLDC motor 1.

Another structural feature for facilitating the starting capability of the BLDC motor 1 is a decrease in the transverse extensions 1_{b} of the strip 9 towards its longitudinal ends, i.e., in its end sections 16. After bending the strip 9, this results in decreasing axial extensions of the end parts 13 in the same circumferential direction 8. Examples for such decreasing axial extensions by lateral chamfers 21 are shown in Figs. 4b and 4c. Other examples include notches (not shown) or the like that decrease said axial extensions of the end parts 13 in the same circumferential direction 8.

In a further variant illustrated in Fig. 4d, said end parts 13 have holes 22 as structural features, the number and/or sizes of which increase(s) in the same circumferential direction 8 after bending the strip 9 into its S-shape. It is understood that the holes 22 may be square (Fig. 4d), round or of another cross-section and/or that there may be one or more holes 22 in each end part 13.

It is noted, that any of the shown designs of the strip 9, can, similarly, be applied to the embodiments of the metal core 4 constituted by the combination 10 of two strips 11 or 12. In these cases, the end parts 13 also decrease in their axial extensions and/or have holes 22 of increasing number and/or sizes in the same circumferential direction 8, such that only one of the end sections 18₁, 18₂ of each C-shaped strip 11 and usually only said other leg 20 of each L-shaped strip 12 are chamfered, notched or holed.

Fig. 5 shows a further example of the strip 9 or the combination 10 of strips 11, 12 (here: on the basis of the example of Fig. 4a). Therein, the strip 9 or the combination 10 has one or more pins 23 which extend in the same axial direction (here: downwards). Thereby, the BLDC motor 1 can be mounted, e.g., on a printed circuit board ("PCB"), in particular a control PCB for controlling the BLDC motor 1, and the metal core 4 can be grounded if desired. Optionally, components of the PCB axially project into the space between the stator 2, the rotor 3 and the coil 5, e.g., capacitors and inductors of a filter circuit or a Hall sensor for sensing the position of the rotor 3.

As shown in the example of Fig. 1a, the coil may be formed by a single winding of one or more turns of wire. Alternatively, the coil 5 is formed by two radially spaced windings 24₁, 24₂ of one or more turns of wire, particularly when the axle of the rotor 3 is to be accommodated therebetween as in the examples of Figs. 1b, 2a, 2b and 3.

Figs. 6a, 6b and 6c depict different ways of winding the coil 5 with the two radially spaced windings 24₁, 24₂. Fig. 6a shows oppositely coupled bifilar windings 24₁, 24₂ which are connected in series. In the example of Fig 6b, the windings 24₁ and 24₂ are monofilar and also connected in series. The windings 24₁ and 24₂ shown in Fig. 6c are oppositely coupled and separately supplied. Therein, the exemplary windings 24₁ and 24₂ of Figs. 6a and 6c only require two switches for operation, e.g., a half-bridge inverter as known in the art, resulting in a copper utilisation of 50%, as only one of the two sub-phases is conducting current at any time. On the other hand, the windings 24₁, 24₂ according to Fig. 6b have 100% copper utilisation but require four switches, e.g., a full-bridge inverter.

The present invention is not limited to the specific embodiments described above but encompasses all variants, modifications and combinations thereof that fall within the scope of the appended claims.

## Claims

1. A single-phase brushless direct current, BLDC, motor comprising a stator (2) with a metal core (4) on which a coil (5) is wound and a rotor (3) which is rotatable about a central axis (6) and has a plurality of circumferentially alternating magnetic poles (7_{N}, 7_{S}) surrounding the stator (2), **characterized in that** the metal core (4) is constituted by one strip (9) or a combination (10) of two strips (11, 12) of sheet metal having a sheet plane which is parallel to the central axis (6), wherein said one strip (9) or said combination (10) has two opposite end parts (13) which are bent in circumferential direction (8) of the rotor (3) to form two opposite stator poles each facing the rotor (3) with a radial air gap (G), and a middle part (14) on which the coil (5) is wound and which connects the two end parts (13).

2. The single-phase BLDC motor according to claim 1, wherein said one strip (9) has the shape of an S when seen in the direction of the central axis (6), and wherein the middle section (15) of the S forms said middle part (14) and each end section (16) of the S forms one of said end parts (13).

3. The single-phase BLDC motor according to claim 2, wherein the middle section (15) of the S is bent around the central axis (6) to accommodate an axle of the rotor (3).

4. The single-phase BLDC motor according to claim 1, wherein each strip (11) of said combination (10) has the shape of a C when seen in the direction of the central axis (6), wherein the two Cs are arranged back-to-back with their middle sections (17) abutting against each other to form said middle part (14), and wherein the one end sections (18₁) of each of the two Cs form the one and their other end sections (18₂) form the other one of said end parts (13).

5. The single-phase BLDC motor according to claim 4, wherein the middle sections (17) of the two Cs are bent around the central axis (6) to accommodate an axle of the rotor (3).

6. The single-phase BLDC motor according to claim 4 or 5, wherein the two end sections (18₁, 18₂) of each C have different lengths and the two Cs are arranged back-to-back in such a way that the end sections (18₁, 18₂) forming each of said end parts (13) have different lengths.

7. The single-phase BLDC motor according to claim 1, wherein each strip (12) of said combination (10) has the shape of an L when seen in the direction of the central axis (6), wherein the two Ls are arranged back-to-back with their one legs (19) abutting against each other to form said middle part (14), and wherein each of their other legs (20) forms one of said end parts (13).

8. The single-phase BLDC motor according to claim 7, wherein said one legs (19) of the two Ls are bent around the central axis (6) to accommodate an axle of the rotor (3).

9. The single-phase BLDC motor according to any one of claims 1 to 8, wherein said end parts (13) are bent such that the radial air gaps (G) decrease in the same circumferential direction (8).

10. The single-phase BLDC motor according to any one of claims 1 to 9, wherein the axial extensions of said end parts (13) decrease in the same circumferential direction (8).

11. The single-phase BLDC motor according to any one of claims 1 to 10, wherein said end parts (13) have holes (22), the number and/or sizes of which increase/s in the same circumferential direction (8).

12. The single-phase BLDC motor according to any one of claims 1 to 11, wherein the coil (5) is formed by two radially spaced windings (24₁, 24₂).

13. The single-phase BLDC motor according to claim 12, wherein each winding (24₁, 24₂) is bifilar.

14. The single-phase BLDC motor according to any one of claims 1 to 13, wherein said one strip (9) or said combination (10) has one or more pins (23) extending in the same axial direction for mounting on a printed circuit board.

15. The single-phase BLDC motor according to any one of claims 1 to 14, wherein the rotor (3) has two magnetic poles (7_{N}, 7_{S}).
